# EUROPÄISCHE PATENTANMELDUNG

(11) **EP 1 538 389 A2**
(43) Veröffentlichungstag der Anmeldung: **08.06.2005**
(21) Anmeldenummer: 04026339.4
(22) Anmeldetag: 05.11.2004
(51) Int. Cl.: F16P 1/00

(54) **Längenveränderlicher Lamellen-Faltenbalg**

(30) Priorität: 03.12.2003 DE 20318880 U
(71) Anmelder: HEMA Maschinen- und Apparateschutz GmbH, 63500 Seligenstadt (DE)
(72) Erfinder: Walter, Dieter, 63500 Seligenstadt (DE); Walter, Steffen, 63110 Rodgau (DE)
(74) Vertreter: Schumacher, Bernd, Dipl.-Ing.

(57) **Zusammenfassung**

Die Erfindung betrifft einen längenveränderlichen Lamellen-Faltenbalg als maschinentechnische Schutzeinrichtung, wobei die Lamellen (12) an dem Faltenbalg (10) jeweils über eine Ösen-Keder-Verbindung gehalten sind, deren längliches, einen Längsschlitz (26) aufweisendes Ösenglied (14) mit seinem Ösen-Steg (22) an der Innenseite der Lamelle befestigt ist und deren durch den Längsschlitz (26) in einen Ösen-Innenraum (20) eingreifendes längliches Kederglied (16) mit seinem Keder-Steg an der Außenseite des Faltenbalgs befestigt ist sowie mit seinem verdickten Keder-Rand in dem Ösen-Innenraum gehalten ist.

Das Ziel der vorliegenden Erfindung ist es, einen Lamellen-Faltenbalg der genannten Art mit einfachen Maßnahmen so auszubilden, daß bei der Montage und bei der Demontage von Lamellen auf einen seitlichen Freiraum neben dem Faltenbalg verzichtet werden kann. Zu diesem Zwecke zeichnet sich der Lamellen-Faltenbalg der genannten Art erfindungsgemäß dadurch aus, daß das Ösenglied (14) zumindest bereichsweise federelastisch ausgebildet ist und hierdurch sein Längsschlitz (26) rückstellend aufweitbar ist und daß der verdickte Keder-Rand sowie der Keder-Steg ausreichend eigenstabil ausgebildet sind, um mit dem Keder-Steg den verdickten Keder-Rand durch den von diesem vorübergehend aufgeweiteten Längsschlitz (26) quer zur Lamellenlängsrichtung in den Ösen-Innenraum (20) einzudrücken und aus diesem herauszuziehen.

## Beschreibung

Die Erfindung betrifft einen längenveränderlichen Lamellen-Faltenbalg als maschinentechnische Schutzeinrichtung, wobei die Lamellen an dem Faltenbalg jeweils über eine Ösen-Keder-Verbindung gehalten sind, deren längliches, einen Längsschlitz aufweisendes Ösenglied mit seinem Ösen-Steg an der Innenseite der Lamelle befestigt ist und deren durch den Längsschlitz in einen Ösen-Innenraum eingreifendes längliches Kederglied mit seinem Keder-Steg an der Außenseite des Faltenbalgs befestigt ist sowie mit seinem verdickten Keder-Rand in dem Ösen-Innenraum gehalten ist.

Bei einem solchen Faltenbalg lassen sich die Lamellen schnell und einfach anbringen, indem jede Lamelle über ihr Ösenglied in Längsrichtung der Lamelle auf den verdickten Keder-Rand des Kedergliedes am Faltenbalg aufgeschoben wird. Bei der Demontage einer Lamelle wird deren Ösenglied in umgekehrter Längsrichtung der Lamelle von dem Keder-Rand abgezogen. Der wesentliche Nachteil einer solchen Bauart besteht darin, daß die Montage und die Demontage der Lamellen neben dem Faltenbalg einen seitlichen Freiraum erfordern, der je nach Bauart in etwa der Breite des Faltenbalgs entspricht.

Der vorliegenden Erfindung liegt deshalb die Aufgabe zugrunde, einen Lamellen-Faltenbalg der genannten Art mit einfachen Maßnahmen so auszubilden, daß bei der Montage und bei der Demontage von Lamellen auf einen seitlichen Freiraum neben dem Faltenbalg verzichtet werden kann.

Zur Lösung der gestellten Aufgabe zeichnet sich ein längenveränderlicher Lamellen-Faltenbalg der im Oberbegriff von Anspruch 1 genannten Art erfindungsgemäß durch die im Kennzeichen dieses Anspruchs aufgeführten Merkmale aus, nämlich dadurch, daß das Ösenglied zumindest bereichsweise federelastisch ausgebildet ist und hierdurch sein Längsschlitz rückstellend aufweitbar ist und daß der verdickte Keder-Rand sowie der Keder-Steg ausreichend eigenstabil ausgebildet sind, um mit dem Keder-Steg den verdickten Keder-Rand durch den von diesem vorübergehend aufgeweiteten Längsschlitz quer zur Lamellenlängsrichtung in den Ösen-Innenraum einzudrücken und aus diesem herauszuziehen.

Bei dieser Ausbildung ist neben dem Faltenbalg kein Freiraum erforderlich, um die Lamellen mit dem Faltenbalg zu verbinden und hiervon zu lösen. Die Lamellen können etwa quer zu ihrer Längsrichtung verschoben werden, um die Ösen-Keder-Verbindung herzustellen oder zu lösen. Dadurch werden die Anwendung sowie die Wartung vereinfacht und der Anwendungsbereich vergrößert.

Die weitere Ausbildung gemäß Anspruch 2 hat sich in der Praxis besonders bewährt, weil sich die Ösen-Keder-Verbindung dabei von einem zum anderen Ende des Kedergliedes fortschreitend, also jeweils nur bereichsweise, und somit einfach sowie kräftesparend herstellen bzw. lösen läßt.

Die Ausgestaltungen der Ansprüche 3 bis 5 sind vorteilhaft, weil hierdurch eine kostengünstige und gewichtsleichte Herstellung stabiler Bauteile möglich ist.

Die Ausbildungen gemäß den Ansprüchen 6 bis 8 ermöglichen ein leichtes, kraftsparendes, gezieltes Einführen sowie Hineindrücken des verdickten Keder-Randes in den Ösen-Innenraum bei allmählichem Aufweiten des Längsschlitzes und ein entsprechendes Herausziehen desselben.

Die Merkmale der Ansprüche 9 bis 11 stellen sicher, daß die Lamellen sicher sowie fest gehalten werden und dennoch eine gewisse Schwenkbeweglichkeit haben. Außerdem sind sie hierdurch einfach montierbar und demontierbar.

Eine metallische Ausführung gemäß Anspruch 12 kann zweckmäßig sein, um eine besonders große Festigkeit und Elastizität zu erzielen.

Die Ausführung gemäß Anspruch 13 ermöglicht einen besonders intensiven gegenseitigen Eingriff der Ösen-Keder-Verbindung. Das kann beispielsweise bei schnell bewegten Faltenbälgen zu einer verbesserten Laufruhe beitragen, wenn dadurch ein Flattern der Lamellen vermieden wird.

Die Maßnahme von Anspruch 14 erleichtert das Einführen des Keder-Randes in den Ösen-Innenraum.

Die Erfindung wird nachfolgend an zeichnerisch dargestellten Ausführungsbeispielen näher erläutert. Es zeigen:

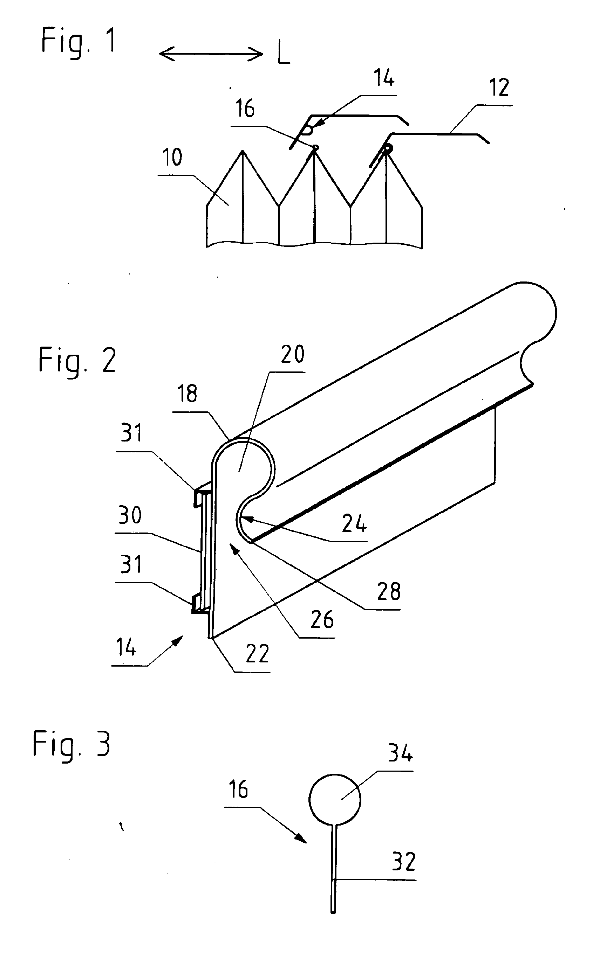

- Fig. 1: in einer Prinzipdarstellung einen Faltenbalg mit einem daran angebrachten Kederglied und mit einem Ösenglied an einer noch nicht montierten Lamelle,
- Fig. 2: das Ösenglied aus Fig. 1 in einer vergrößerten Seitenansicht und
- Fig. 3: das Kederglied aus Fig 1 in einer vergrößerten Seitenansicht.

Gemäß den Figuren sind an den äußeren Falten eines aus flexiblem Material bestehenden, längenveränderlichen, halbseitig dargestellten Faltenbalges 10 beispielsweise metallische Lamellen 12 anzubringen, die sich im Montagezustand in Längsrichtung L des Faltenbalges 10 gegenseitig überlappen und unter einer gewissen Vorspannung schuppenartig aufeinanderliegen. Diese Lamellen 12, von denen nur eine dargestellt ist, schützen den Faltenbalg 10 vor schädigenden äußeren Einflüssen, wie Hitze und aggressiven Medien, und behindern nicht die Längenveränderungen des Faltenbalges 10, bei denen sie sich veränderlich weit überlappen.

Die Lamellen 12 werden jeweils durch eine Ösen-Keder-Verbindung mit einem Ösenglied 14 sowie einem Kederglied 16 an dem Faltenbalg 10 lösbar gehalten. Das Öseglied 14 ist an dem Rand der Lamelle 12 innenseitig befestigt, wie angenietet, angeschweißt oder angeklebt. Das Kederglied 16 ist im Bereich der äußeren Falten des Faltenbalges 10 an diesem befestigt, wie angenäht oder angeklebt.

Das Ösenglied 14 hat eine im vorliegenden Fall etwa kreisringförmige Ösen-Begrenzung 18 und einen hierdurch gebildeten Ösen-Innenraum 20. Die Ösen-Begrenzung 18 geht an ihrer einen Seite in einen im vorliegenden Fall geraden Ösen-Steg 22 und an ihrer anderen Seite in einen Ösen-Rand 24 mit einer sich daran anschließenden, schräg aufweitenden Rand-Verlängerung 28 über. Zwischen dem Ösen-Steg 22 und dem Ösen-Rand 24 bzw. der Rand-Verlängerung 28 befindet sich ein an den Ösen-Innenraum 20 übergehender Längsschlitz 26.

Das Ösenglied 14 ist zumindest bereichsweise federnd ausgebildet, so daß es im Bereich seines Längsschlitzes 26 elastisch aufweitbar ist. Es kann beispielsweise aus einem geeigneten Kunststoff oder aus Federstahl bestehen. Insbesondere bei einer Ausbildung aus Kunststoff kann es zweckmäßig sein, den Ösen-Steg 22 an seiner Außenseite mit einem verstärkenden bzw. versteifenden und haltenden Metallstreifen 30 zu versehen, der beispielsweise in eine Aufnahme 31 am Ösen-Steg 22 einschiebbar ist und mit der metallischen Lamelle 12 verbunden, wie verschweißt, sein kann. Auf diese Weise kann das Ösenglied 14 an der Lamelle 12 lösbar angebracht werden.

Das Kederglied 16 hat einen ausreichend formstabilen Keder-Steg 32, der an dem Faltenbalg 10 zu befestigen ist, und einen kopfartig verdickten, ebenfalls ausreichend formstabilen Keder-Rand 34 mit einem im vorliegenden Beispiel im wesentlichen kreisrunden Querschnitt.

Im montierten Zustand befindet sich der Keder-Rand 34 in dem Ösen-Innenraum 20, wobei der Keder-Steg 32 durch den Längsschlitz 26 greift. Dabei kann der Keder-Rand 34 den Ösen-Innenraum im wesentlichen ausfüllen, um einen spielfreien Sitz zu gewährleisten. Der Keder-Rand 24 kann dabei innenseitig auf dem Keder-Steg 32 aufliegen und diesen gegen den Keder-Steg 22 drücken. Durch diese Maßnahmen ist es möglich, die sich überlappenden Lamellen 12 unter einer gewissen gegenseitigen Auflagevorspannung zu halten, wodurch die Dichtigkeit und die Laufruhe des Lamellenschutzes verbessert werden können. Dennoch ist aufgrund der federnden Ausbildung und der Formgebungen eine gewisse Schwenkbeweglichkeit der Lamellen 12 gewährleistet.

Beim Montieren einer Lamelle 12 wird diese mit ihrem Ösenglied 14 etwa quer zu ihrer Längsrichtung gegenüber dem entsprechenden Kederglied 16 so bewegt, daß der verdickte kopfartige Keder-Rand 34 durch den sich vorübergehend elastisch federnd aufweitenden Längsschlitz 26 in den Ösen-Innenraum 20 gedrückt wird. Durch die federnde Ausbildung des Ösengliedes 14 erfolgt dabei gewissermaßen ein einschnappendes Einrasten des Keder-Randes 34. Das Einführen desselben wird durch die schräge Rand-Verlängerung 28 begünstigt.

Beim Demontieren einer Lamelle 12 wird diese etwa quer zu ihrer Längsrichtung gegenüber dem entsprechenden Kederglied 16 so bewegt, daß der verdickte kopfartige Keder-Rand 34 unter vorübergehender Aufweitung des Längsschlitzes 26 aus dem Ösen-Innenraum 20 herausgezogen wird.

Da die Montage- und Demontagevorgänge der Lamelle 12 immer so erfolgen, daß diese dabei etwa quer zu ihrer Längsrichtung - und nicht wie beim Stand der Technik in ihrer Längsrichtung - bewegt wird, sind diese Vorgänge auch dann möglich, wenn der Faltenbalg seitlich direkt an irgendwelche anderen Teile angrenzt.

Um das Montieren und Demontieren der Lamellen 12 zu erleichtern und die hierfür erforderlichen Kräfte zu reduzieren kann es sinnvoll sein, die Keder-Ösen-Verbindung von ihrem einen Ende ausgehend und bis zu ihrem anderen Ende fortschreitend, also jeweils nur bereichsweise, herzustellen bzw. aufzuheben. Bei der Montage bzw. Demontage wird der Keder-Rand 34 also nicht gleichzeitig über seine ganze Länge in den Längsschlitz 26 eingeführt bzw. aus diesem herausgezogen. Stattdessen erfolgt dabei ein leichtes Schrägstellen der Lamelle 12, so daß der Längsschlitz 26 jeweils nur bereichsweise aufgeweitet wird.

## Patentansprüche

1. Längenveränderlicher Lamellen-Faltenbalg als maschinentechnische Schutzeinrichtung, wobei die Lamellen (12) an dem Faltenbalg (10) jeweils über eine Ösen-Keder-Verbindung gehalten sind, deren längliches, einen Längsschlitz (26) aufweisendes Ösenglied (14) mit seinem Ösen-Steg (22) an der Innenseite der Lamelle befestigt ist und deren durch den Längsschlitz in einen Ösen-Innenraum (20) eingreifendes längliches Kederglied (16) mit seinem Keder-Steg (32) an der Außenseite des Faltenbalgs befestigt ist sowie mit seinem verdickten Keder-Rand (34) in dem Ösen-Innenraum gehalten ist,
**dadurch gekennzeichnet,**
**daß** das Ösenglied (14) zumindest bereichsweise federelastisch ausgebildet ist und hierdurch sein Längsschlitz (22) rückstellend aufweitbar ist und
**daß** der verdickte Keder-Rand (34) sowie der Keder-Steg (32) ausreichend eigenstabil ausgebildet sind, um mit dem Keder-Steg (32) den verdickten Keder-Rand (34) durch den von diesem vorübergehend aufgeweiteten Längsschlitz (26) etwa quer zur Lamellenlängsrichtung in den Ösen-Innenraum (20) einzudrücken und aus diesem herauszuziehen.

2. Lamellen-Faltenbalg nach Anspruch 1, **dadurch gekennzeichnet, daß** die Eigenstabilität von Keder-Rand (34) und Keder-Steg (32) ausreicht, um mit dem Keder-Steg den verdickten Keder-Rand von einem zum anderen Ende des Kedergliedes (16) fortschreitend durch den von diesem vorübergehend aufgeweiteten Längsschlitz (26) seitlich in den Ösen-Innenraum (20) einzudrükken und aus diesem herauszuziehen.

3. Lamellen-Faltenbalg nach Anspruch 1 oder 2, **dadurch gekennzeichnet, daß** das Ösenglied (14) und/oder das Kederglied (16) jeweils einstückig ausgebildet sind und aus Kunststoff, wie Hart-PVC, bestehen.

4. Lamellen-Faltenbalg nach Anspruch 3, **dadurch gekennzeichnet, daß** das Ösenglied (14) und/oder das Kederglied (16) jeweils als Kunststoff-Ziehteile ausgebildet sind.

5. Lamellen-Faltenbalg nach Anspruch 3 oder 4, **dadurch gekennzeichnet, daß** das Ösenglied (14) an der einer metallischen Lamelle (12) zugewandten Seite ihres Ösen-Steges (22) mit einem mit der Lamelle (12) zu verbindenden Metallstreifen (30) verbunden oder verbindbar ist.

6. Lamellen-Faltenbalg nach einem der Ansprüche 1 bis 5, **dadurch gekennzeichnet, daß** der Längsschlitz (26) in einem Keder-Einführungsbereich von außen in Richtung zum Ösen-Innenraum (20) schmaler wird.

7. Lamellen-Faltenbalg nach einem der Ansprüche 1 bis 6, **dadurch gekennzeichnet, daß** der aufweitbare Längsschlitz (26) des Ösengliedes (14) von einem an der Lamelle (12) befestigten Ösen-Steg (22) und einem federelastisch umbiegbaren Ösen-Rand (24) begrenzt wird.

8. Lamellen-Faltenbalg nach Anspruch 7, **dadurch gekennzeichnet, daß** der Ösen-Rand (24) eine einen Keder-Einführungsbereich bildende freie Rand-Verlängerung (28) aufweist.

9. Lamellen-Faltenbalg nach einem der Ansprüche 1 bis 8, **dadurch gekennzeichnet, daß** der verdickte Keder-Rand (34) den Ösen-Innenraum (20) zumindest weitgehend ausfüllt.

10. Lamellen-Faltenbalg nach einem der Ansprüche 1 bis 9, **dadurch gekennzeichnet, daß** der Keder-Steg (32) im Bereich des Längsschlitzes (26) von Teilen des Ösengliedes (14) eingespannt gehalten ist.

11. Lamellen-Faltenbalg nach einem der Ansprüche 1 bis 10, **dadurch gekennzeichnet, daß** der Keder-Rand (34) und der Ösen-Innenraum (20) im wesentlichen kreisrunde Querschnitte haben.

12. Lamellen-Faltenbalg nach einem der Ansprüche 1 bis 11, **dadurch gekennzeichnet, daß** das Ösenglied (14) und/oder das Kederglied (16) jeweils einstückig ausgebildet sind und aus Metall, wie Federstahl, bestehen.

13. Lamellen-Faltenbalg nach einem der Ansprüche 1 bis 12, **dadurch gekennzeichnet, daß** das Ösenglied (14) und/oder das Kederglied (16) zumindest in ihrem gegenseitigen Eingriffsbereich einen reibungserhöhenden Oberflächenüberzug aufweisen.

14. Lamellen-Faltenbalg nach einem der Ansprüche 1 bis 13, **dadurch gekennzeichnet, daß** das Ösenglied (14) zumindest an einem Längsende ein Hilfsmittel zum manuellen Aufweiten des Längschlitzes (26) aufweist.
